# EUROPEAN PATENT APPLICATION

(11) **EP 4 067 407 A1**
(43) Date of publication of application: **05.10.2022**
(21) Application number: 21166666.4
(22) Date of filing: 01.04.2021
(51) Int. Cl.: C08G 65/00, C10M 107/38

(54) **(PER)FLUOROPOLYETHER POLYMERS AND USE THEREOF AS LUBRICANTS**

(71) Applicant: Solvay Specialty Polymers Italy S.p.A., 20021 Bollate (MI) (IT)
(72) Inventor: BEA, Michela, 21040 Carnago (IT); GALIMBERTI, Marco, 20021 Bollate (IT); VALSECCHI, Roberto, 24041 Brembate (IT); GUARDA, Pier Antonio, 20020 Arese (IT)
(74) Representative: Benvenuti, Federica

(57) **Abstract**

The present invention relates to a lubrication method, to polymers for use in such method and to lubricant compositions containing the same.

## Description

### Technical Field

The present invention relates to a lubrication method, to polymers for use in such method and to lubricant compositions containing the same.

### Background Art

Lubrication is an important aspect of maintaining machinery in proper operating condition. Machine elements such as bearings, pins, shafts, gears and joints require proper lubrication between their moving surfaces to decrease friction, prevent contamination, reduce wear and dissipate heat. Improper lubrication is likely to lead to premature component wear and component or system failure.

(Per)fluoropolyether polymers (in the following referred to as "PFPE polymers") have been long known as base oils or as additives in several lubricant applications. However, despite their outstanding performances under harsh conditions, they have scarce compatibility with mineral and synthetic hydrogenated lubricants, which limits their use in formulations with conventional lubrication systems.

Several syntheses of PFPE polymers have been disclosed in the art. The first synthesis of unspecified perfluorinated polyether mixtures was reported in 1953, when an oily product was obtained in the course of photoligomerization of hexafluoropropene. Since then, a number of different perfluorinated polyethers have been synthesized and described in literature.

Fluorinated polyether compounds have been disclosed for example in US 2016/0137947 (ASAHI GLASS COMPANY, LIMITED). This patent application in particular discloses fluorinated polyether compounds represented by the following formula:

{X-O-[(CF₂CF₂O)ₐ-(CF₂CF₂CF₂CF₂O)_{b}]}ₘ-Y-{[(OCF₂CF₂)_{c}-(OCF₂CF₂CF₂CF₂)_{d}]-O-Z}ₙ

wherein
m is from 1 to 10;
n is from 0 to 10;
X is a group having a hydroxy group, a carboxy group, an ester group or an aryl group;
Y is an (m+n) valent alkane group, an (m+n) valent alkane group having an etheric oxygen atom inserted between carbon-carbon atoms, an (m+n) valent fluoroalkane group, an (m+n) valent fluoroalkane group having an etheric oxygen atom inserted between carbon-carbon atoms, or a cyclotriphosphazene structure (P₃N₃); and
Z is a group not having a hydroxy group, a carboxy group, an ester group or an aryl group, and having a haloalkyl group (provided that the halogen atom is a fluorine atom or a chlorine atom) or a haloalkyl group (provided that the halogen atom is a fluorine atom or a chlorine atom) having an etheric oxygen inserted between carbon-carbon atoms.
In the moiety -[(CF₂CF₂O)ₐ-(CF₂CF₂CF₂CF₂O)_{b}]-, the linking order of "a" number of units (CF₂CF₂O) and "b" number of units (CF₂CF₂CF₂CF₂O) is not limited, i.e. units (CF₂CF₂O) and (CF₂CF₂CF₂CF₂O) may be randomly located, alternately arranged or at least one block consisting of a plurality of units (CF₂CF₂O) and units (CF₂CF₂CF₂CF₂O) may be linked. Structures having the following formula are preferred: -CF₂CF₂O(CF₂CF₂CF₂CF₂OCF₂CF₂O)ₑ- wherein e is from 1 to 99.

Recently, patent application WO 2019/202076 (in the name of Solvay Specialty Polymers Italy S.p.A.) disclosed a method for manufacturing PFPE polymers having a pre-defined chemical structure, i.e. characterized by recurring units whose distribution in the polymer backbone is non-random but defined a priori, and wherein the nature of chain ends can be appropriately tuned between functional groups and perfluorinated, or nonreactive or neutral, groups.

More in particular, this patent application discloses a method for manufacturing a mixture of polymers [mixture (P^{FF}_{COOH-CF3})], said mixture (P^{FF}_{COOH}-_{CF3}) comprising polymers possessing a backbone consisting of a sequence of recurring units of formula

-O-CF₂-R_{F}-CF₂-O-CF₂CF₂-(CR_{f}¹R_{f}²)ₐ-O-R_{f}-O-(CR_{f}¹R_{f}²)_{b}-CF₂CF₂-,

wherein:
- R_{f} is a C₁-C₁₈ perfluorocarbon group, possibly comprising one or more than one ethereal oxygen;
- R_{F} is a bond or a C₁-C₁₈ perfluorocarbon group, possibly comprising one or more than one ethereal oxygen;
- each or R_{f}¹ and R_{f}², equal to or different from each other, is F or a C₁-C₆ perfluorocarbon group;
- a and b being independently zero or 1, preferably being equal to each other, and being collectively zero or 1;
and said polymers having chain ends selected from the group consisting of -COOH and -CX_{F}¹X_{F}²F, with X_{F}¹ and X_{F}² being F or a C₁-C₃ perfluoroalkyl group.

The process of this patent application was disclosed as being particular suitable to manufacture mono-functional polymers. In other words, at the end of the method disclosed in WO 2019/202076, a mixture (P^{FF}_{COOH-CF3}) comprising a major amount of any compound of formula (IX):

HOOC-R_{F}-[-CF₂-O-CF₂CF₂-(CR_{f¹}R_{f²})ₐ-O-R_{f}-O-(CR_{f¹}R_{f²})_{b}-CF₂CF₂-O-CF₂-R_{F}]

was obtained,
wherein the molar ratio between the overall amount of end groups of formula -COOH and of formula -CX_{F}¹X_{F}²F, with X_{F}¹ and X_{F}² being F or a C₁-C₃ perfluoroalkyl group, is comprised between 35:65 to 65:35, preferably between 40:60 to 60:40, most preferably between 45:55 to 55:45.

### Summary of invention

While research and development in the recent years focused on mono- and/or bi-functional PFPE polymers, the Applicant perceived that there is still the need for providing neutral PFPE polymers that can be used as lubricants, in particular in harsh environments.

Facing the problem of providing new neutral perfluoropolyether polymers (also referred to as "non-functional perfluoropolyether polymer") suitable for applications in which a lubricant must withstand very high temperature and/or very high pressure for a long time, the Applicant surprisingly found that the process disclosed in patent application WO 2019/202076 can be advantageously used for the manufacture of neutral perfluoropolyether polymers.

In a first aspect, the present invention relates to a polymer [polymer (P)] complying with the following general formula (I):

(I) F-R_{F}-[-CF₂-O-CF₂CF₂-(CR_{f}¹R_{f}²)ₐ-O-R_{f}-O-(CR_{f}¹R_{f}²)_{b}-CF₂CF₂-O-CF₂-R_{F}]_{n"}-F

wherein:
R_{F} is a bond or a C₁-C₁₈ perfluorocarbon group, preferably comprising one or more than one ethereal oxygen;
R_{f} is a C₁-C₁₈ perfluorocarbon group, preferably comprising one or more than one ethereal oxygen;
each of R_{f}¹ and R_{f}², equal to or different from each other, is F or a C₁-C₆ perfluorocarbon group;
a and b being independently zero or 1, preferably being equal to each other, and being collectively zero or 1;
n" is such that the number average molecular weight of compounds (I) is between 8 000 and 50 000 g/mol, as determined by GPC analysis.

In a second aspect, the present invention relates to a mixture [mixture (M)] comprising polymers of formulae (I), (II), and (III) represented below:

(I) F-R_{F}-[-CF₂-O-CF₂CF₂-(CR_{f}¹R_{f}²)ₐ-O-R_{f}-O-(CR_{f}¹R_{f}²)_{b}-CF₂CF₂-O-CF₂-R_{F}]_{n"}-F;

(II) HOOC-R_{F}-[-CF₂-O-CF₂CF₂-(CR_{f}¹R_{f}²)ₐ-O-R_{f}-O-(CR_{f}¹R_{f}²)_{b}-CF₂CF₂-O-CF₂-R_{F}]_{n"}-COOH;

(III) HOOC-R_{F}-[-CF₂-O-CF₂CF₂-(CR_{f}¹R_{f}²)ₐ-O-R_{f}-O-(CR_{f}¹R_{f}²)_{b}-CF₂CF₂-O-CF₂-R_{F}]_{n"}-F;

wherein, in each of formula (I), (II) and (III):
R_{F} is a bond or a C₁-C₁₈ perfluorocarbon group, preferably comprising one or more than one ethereal oxygen;
R_{f} is a C₁-C₁₈ perfluorocarbon group, preferably comprising one or more than one ethereal oxygen;
each of R_{f}¹ and R_{f}², equal to or different from each other, is F or a C₁-C₆ perfluorocarbon group;
a and b being independently zero or 1, preferably being equal to each other, and being collectively zero or 1;
n" is such that the number average molecular weight of compounds (I) is between 8000 and 50000 g/mol, as determined by GPC analysis;
characterized in that said mixture comprises at least 75.00 wt.%, preferably from 75.00 to 99.99 wt.%, more preferably from 80.00 to 99.99 wt.% and even more preferably from 90.00 to 99.99 wt.% of polymer of formula (I).

Mixture (M) and polymer (P) according to the present invention are endowed with lubricant properties and are hence advantageously used as lubricant to reduce friction and wear, even when harsh conditions, like high temperatures and pressure last for long time.

### Description of embodiments

For the purposes of the present description and the following claims:
- the term "(per)fluoropolyether" stands for "fully or partially fluorinated polyether";
- the acronym PFPE stands for (per)fluoropolyether.

Advantagesouly, n" is such that the number averaged molecular weight of polymer (I) is between 10000 and 30000, and even more preferably between 12000 and 20000 g/mol, as determined by GPC analysis.

Preferably, in polymer (P), when R_{f} is -CF₂CF₂- group, R_{F} is different from sgima bond.

According to a preferred embodiment, polymer (P) complies with the following general formula (I-a):

(I-a) F-R_{F}-[CF₂-O-CF₂CF₂-O-R_{f}-O-CF₂CF₂-O-CF₂-R_{F}]_{n"}-F

wherein :
R_{F} is a bond or a C₁-C₁₈ perfluorocarbon group, preferably comprising one or more than one ethereal oxygen;
R_{f} is a C₁-C₁₈ perfluorocarbon group, preferably comprising one or more than one ethereal oxygen;
each of R_{f}¹ and R_{f}², equal to or different from each other, is F or a C₁-C₆ perfluorocarbon group;
n" is such that the number average molecular weight of polymer (I) is between 8000 and 50000 g/mol, as determined by GPC analysis.

Advantagesouly, n" is such that the number averaged molecular weight of polymer (I-a) is between 10000 and 30000, and even more preferably between 12000 and 20000 g/mol, as determined by GPC analysis.

Mixture (M) comprises at most 25.00 wt.%, preferably at most 20.00 wt.% and more preferably at most 10.00 wt.% of compounds of formula (II) and (III) based on the total weight of mixture (M).

Mixture (M) preferably comprises from 0.001 wt.%, more preferably from 0.005 wt.% and even more preferably 0.01 wt.% of compounds of formula (II) and (III) based on the total weight of mixture (M).

Mixture (M) can comprise a minor amount of compounds complying with formula (IV) : 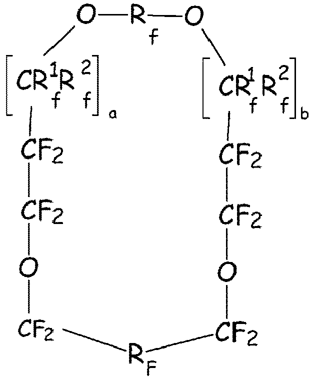 wherein R_{F}, R_{f}, R_{f}¹, R_{f}², a and b have the meaning defined above; and n" is such that the number averaged molecular weight of compounds (IV) is from 300 to 50 000, preferably of 400 to 40 000, more preferably of 500 to 25 000.

The amount of compounds of formula (IV) is below 0.01 wt. %, more preferably below 0.005 wt.%, and even more preferably below 0.001 wt.% based on the total weight of mixture (M) or polymer (P).

Preferably, in mixture (M), polymer of formula (I) is polymer of formula (I-a) as defined above.

Both polymer (P) and mixture (M) are advantageously prepared via the method disclosed in WO 2019/202076, wherein step (5) of fluorination is performed by contacting the mixture obtained in the previous step with a source of molecular fluorine in the amount required to convert all the -COOH end groups into perfluorinated end groups.

More in detail, said process comprises steps (1) to (5) :
**Step (1):** a step of reacting:
   (1a) at least one perfluoro compound [compound (F)] of formula

      CF₂=CF-(CR_{f}¹R_{f}²)ₐ-O-R_{f}-O-(CR_{f}¹R_{f}²)_{b}-CF=CF₂,

      wherein R_{f}, R_{f}¹, R_{f}², a and b have the meaning defined above; and
   (1b) at least one hydrogen-containing compound [compound (H)] of formula:

      HO-CH₂-R_{H}-CH₂-OH,

      with R_{H} being a bond or a C₁-C₁₈ (fluoro)hydrocarbon group, possibly comprising one or more than one ethereal oxygen,
   in molar ratio compound (H):compound (F) of exceeding 1:1, so as to generate a mixture (P^{FH}_{OH-OH}) comprising a major amount of any di-hydroxy compounds of formula (I*):

      HO-CH₂-R_{H}-[CH₂-O-CF₂CHF-(CR_{f}¹Rf²)ₐ-O-R_{f}-O-(CR_{f}¹Rf²)_{b}-CFHCF₂-O-CH₂-R_{H}-]ₙ-CH₂-OH;

      and possibly comprising a minor amount of any compounds of formula (II*): 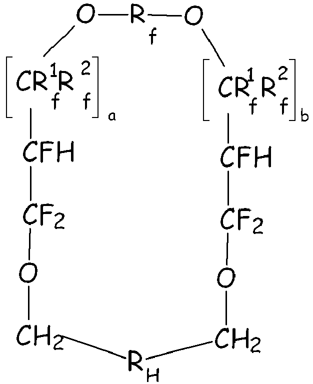 wherein in formulae (I*) and (II*) R_{H}, R_{f}, R_{f}¹, R_{f}², a and b have the meaning defined above, and n is such that the number averaged molecular weight of compounds (I*) is of 8 000 to 50 000 g/mol, as determined by GPC analysis;
**Step (2):** a step of reacting mixture (P^{FH}_{OH-OH}) with COF₂, so as to generate a mixture (P^{FH}_{OC(O)F-OC(O)F}) comprising a major amount of any di-fluoroformate compounds of formula (III*):

   F-C(O)-O-CH₂-R_{H}-[CH₂-O-CF₂CHF-(CR_{f}¹Rf²)ₐ-O-R_{f}-O-(CR_{f}¹Rf²)_{b}-CFHCF₂-O-CH₂-R_{H}-]_{n'}-CH₂-O-C(O)-F;

   and possibly comprising a minor amount of a compound of formula (II*), as above detailed, wherein, in formula (III*), R_{H}, R_{f}, R_{f}¹, R_{f}², a and b have the meaning defined above, and n' is such that the number averaged molecular weight of compounds (I) is of 8 000 to 50 000 as determined by GPC;
**Step (3):** a step of fluorinating mixture (P^{FH}_{OC(O)F-OC(O)F}) with a source of molecular fluorine, so as to generate a mixture (P^{FF}_{OC(O)F-OC(O)F}) comprising a major amount of a perfluorinated di-fluoroformate compound of formula (V*):

   F-C(O)-O-CF₂-R_{F}-[-CF₂-O-CF₂CF₂-(CR_{f}¹R_{f}²)ₐ-O-R_{f}-O-(CR_{f}¹R_{f}²)_{b}-CF₂CF₂-O-CF₂-R_{F}-]_{n"}-CF₂O-C(O)-F, and possibly comprising a minor amount of a

   compound of formula (IV): 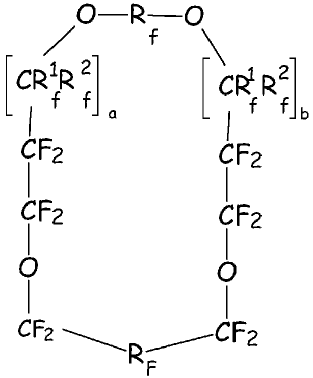 wherein in formulae (V*) and (IV) R_{F}, R_{f}, R_{f}¹, R_{f}², a and b have the meaning defined above; and n" is such that the number averaged molecular weight of compounds (I*) is of 300 to 50 000, preferably of 400 to 40 000, more preferably of 500 to 25 000;
Step (4): a step of hydrolysing mixture (P^{FF}_{OC(O)F-OC(O)F}) in the presence of water, so as to generate a mixture (P^{FF}_{COOH-COOH}) comprising a major amount of a perfluorinated di-carboxylic acid compound of formula (II):

   HOOC-R_{F}-[-CF₂-O-CF₂CF₂-(CR_{f}¹R_{f}²)ₐ-O-R_{f}-O-(CR_{f}1R_{f}²)_{b}-CF₂CF₂-O-CF₂-R_{F}]_{n"'}-COOH,

   and possibly comprising a minor amount of a compound of formula (IV), as detailed above, wherein in formula (II) R_{F}, R_{f}, R_{f}¹, R_{f}², a and b have the meaning defined above, and n"' is such that the number averaged molecular weight of compounds (II) is of 8 000 to 50 000, as determined by GPC;
**Step (5):** a step of fluorinating mixture (P^{FF}_{COOH-COOH}), by contacting with a source of molecular fluorine, wherein the required amount of fluorine to convert the targeted fraction of -COOH end groups, more preferably up to all the -COOH end groups, to generate mixture (M) or polymer (P), as detailed above, is added.

Mixture (M) or polymer (P) can be used as lubricant as such or in admixture with further ingredients or additives typically used in the manufacture of lubricant compositions.

Accordingly, the present invention further relates to a composition [composition (CL)] comprising said mixture (M) or said polymer (P) as defined above, in admixture with further lubricants and/or additives selected from those commonly used in lubricant compositions.

For example, suitable further lubricants are selected in the group comprising partially fluorinated, fully fluorinated and hydrogenated base oils, provided that said base oil is capable of forming a solution with mixture (M) or polymer (P).

Non-limiting examples of fully fluorinated lubricant base oils are those identified as compounds (1) - (8) in EP 2100909 A (SOLVAY SOLEXIS S.p.A.).

For example, suitable additives are selected from thickening agents, antirust agents, antioxidants, thermal stabilizers, pour-point depressants, antiwear agents, including those for high pressures, dispersants, tracers, dyestuffs, talc and inorganic fillers.

Examples of thickening agents are talc, silica, boron nitride, polyureas, alkali or alkali-earth metals terephthalates, calcium and lithium soaps and complexes thereof and PTFE (polytetrafluoroethylene); among them, PTFE is preferred.

Examples of dispersants are, for example, surfactants, preferably nonionic surfactants, more preferably (per)fluoropolyether surfactants and (per)fluoroalkyl surfactants.

If required by the application, solvents can also be used.

Examples of solvents are fluorinated or partially fluorinated solvents, such as Galden^{®} PFPEs, Novec^{®} HFEs and other organic solvents like fluoroalkane, fluoro-aromatic compound, fluoroalkyl ether, fluoroalkyl amine, fluoro-alcohol, ketone such as methyl-ethyl-ketone, alcohol such as isopropyl alcohol, ester such as butylacetate, and then like.

In a further aspect, the present invention relates to a method for lubricating at least one surface of at least one article, said method comprising contacting at least one of said composition (CL), said mixture (M) or said polymer (P) with said at least one surface.

The article that can benefit from composition (CL), mixture (M) or polymer (P) according to the present invention is not particularly limited.

Said article preferably comprises at least one metal surface.

Examples of said article are pumps for use in oil and gas applications, such as electrical submersible pump and the like, rotary machines, such as steam turbines and gas turbines.

The invention will be now described in connection with the following examples, whose purpose is merely illustrative and not intended to limit the scope of the invention.

### Experimental section

### Materials

Commercial Fomblin^{®} PFPE was obtained from Solvay Specialty Polymers Italy S.p.A.:

CF₃O-[CF₂-O-]ₙ-[CF₂-CF₂O]ₘ-CF₂-OCF₃

Mn = 23 700 g/mol (as measured by GPC analysis)
Kinematic viscosity values were as follows:
at 20°C = 1300
at 40°C = 700
at 100°C = 200

The viscosity index (VI) = 384 (ASTM D2270)

### Characterization Methods

The high resolution liquid NMR characterization was accomplished by using an Agilent Inova 400 operating at 399.72 MHz for ¹H and 376.86 MHz for ¹⁹F NMR spectrum and equipped with a 5-mm triple resonance ¹H/¹⁹F{13C,³¹P} PFG probe with a single axis (Z) gradient coil. ¹⁹F-NMR Spectrosopy was used to characterize the structure of the PFPE polymers.

The ¹⁹F-NMR spectrum was obtained on pure samples using CFCl₃ as internal reference.

The ¹H-NMR Spectrosopy was used to confirm the fully fluorination.

Gel Permeation Chromatography (GPC) was used to determine the number average molecular weight (Mn) of the polymers. The technique included use of Rheodyne^{®} Syringe-Loading Sample Injector with loop of 200 mL, Agilent column and Waters refractive index detector. The method was developed for neutral PFPEs.

The kinematic viscosity was measured with capillar viscosimeters.

Thermogravimetric analysis (TGA) was performed using TGA 5500 analyzer from TA Instruments.

Differential scanning calorimeter (DSC): PerkinElmer's Pyris instrument was used to mesure the Tg.

### Example 1 - Synthesis of Polymer (P-1)

Polymer (P-1) having the following formula (as confirmed by ¹⁹F-NMR)

F-CF₂-[CF₂-O-CF₂CF₂-O-CF₂CF₂CF₂-O-CF₂CF₂-O-CF₂CF₂]_{n"}-F

where:
n" is such that the number averaged molecular weight (Mn) is = 17 300 g/mol (as measured by GPC analysis)
was prepared following the method disclosed in **Example 1 of** WO 2019/202076 (Solvay Specialty Polymers Italy S.p.A.), but increasing the duration of the step (1d) to reach a substantially complete conversion of the carboxylic terminal groups. To reach the desired exhaustive conversion, CO (diluted 16% vol/vol in helium) was fed to the reactor by the second inlet pipe to achieve the complete conversion of all residual carboxylic terminal groups (the molar ratio F₂:CO was about 15:1).

The ¹H-NMR confirmed that the structure was fully fluorinated.

The DSC analysis indicated the occurrence of a single glass transition at -102.1°C.

Kinematic viscosity values were as follows:
at 20°C = 1391 cSt
at 40°C = 587 cSt
at 100°C = 109 cSt

The vicosity index (VI) calculated was = 281

### Thermal stability analysis

The thermal stability was measured in air in presence of Lewis acid, using TGA technique. The analysis were done using Al (Lewis acid) crucibles, by heating from room temperature to 300 °C and then keeping the samples at isotherm conditions for 30 minutes.

Thermal stability was demonstrated in comparison with the commercial Fomblin^{®} PFPE polymer. The results are summarized in Table 1.

**Table 1**

| | | **Polymer (P-1)** | **Commercial Fomblin^{®}(*)** |
|---|---|---|---|
| Time | Temperature | Residual Weight | Residual Weight |
| (s) | (°C) | (%) | (%) |
| 1800 | 300 | 97.067 | 0.032 |

| | | | |
|---|---|---|---|
| (*) comparison | | | |

The above results showed that polymer (P-1) according to the present invention had an outstanding stability to high temperature, while showing very good viscosity index.

### Lubricant properties

Lubricant properties of polymer (P-1) were tested with high-frequency linear-oscillation test machine Optimol SRV III.

The tests were done according to protocols ASTM 6425 and ASTM 7421, in both cases at a temperature of 50°C. The results are reported in Table 2.

**Table 2**

| | Coefficient of Friction | Wear ball scar |
|---|---|---|
| Polymer (P-1) | 0.12 | 0.85 mm |
| Commercial Fomblin^{®}(*) | 0.11 | 1.05 mm |

| | | |
|---|---|---|
| (*) comparison | | |

The above results showed that when polymer (P-1) according to the present invention is used as lubricant between two surfaces, it has increased resistance to pressure at the selected temperature compared to commercial PFPE polymers.

## Claims

1. A polymer [polymer (P)] complying with the following general formula (I):
(I) F-R_{F}-[-CF₂-O-CF₂CF₂-(CR_{f}¹R_{f}²)ₐ-O-R_{f}-O-(CR_{f}¹R_{f}²)_{b}-CF₂CF₂-O-CF₂-R_{F}]_{n"}-F
wherein:
R_{F} is a bond or a C₁-C₁₈ perfluorocarbon group, preferably comprising one or more than one ethereal oxygen;
R_{f} is a C₁-C₁₈ perfluorocarbon group, preferably comprising one or more than one ethereal oxygen;
each of R_{f}¹ and R_{f}², equal to or different from each other, is F or a C₁-C₆ perfluorocarbon group;
a and b being independently zero or 1, preferably being equal to each other, and being collectively zero or 1;
n" is such that the number average molecular weight of compounds (I) is between 8 000 and 50 000 g/mol, as determined by GPC analysis.

2. Polymer (P) according to Claim 1, wherein said polymer (P) complies with formula (I-a):
(I-a) F-R_{F}-[CF₂-O-CF₂CF₂-O-R_{f}-O-CF₂CF₂-O-CF₂-R_{F}]_{n"}-F
wherein :
R_{F} is a bond or a C₁-C₁₈ perfluorocarbon group, preferably comprising one or more than one ethereal oxygen;
R_{f} is a C₁-C₁₈ perfluorocarbon group, preferably comprising one or more than one ethereal oxygen;
each of R_{f}¹ and R_{f}², equal to or different from each other, is F or a C₁-C₆ perfluorocarbon group;
n" is such that the number average molecular weight of polymer (I-a) is between 8 000 and 50 000 g/mol, as determined by GPC analysis.

3. Polymer (P) according to any one of Claim 1 or 2, wherein n" is such that the number averaged molecular weight of polymer (I) or (I-a) is between 10 000 and 30 000, preferably between 12 000 and 20 000 g/mol, as determined by GPC analysis.

4. A mixture [mixture (M)] comprising polymers of formulae (I), (II), and (III) represented below:
(I) F-R_{F}-[-CF₂-O-CF₂CF₂-(CR_{f}¹R_{f}²)ₐ-O-R_{f}-O-(CR_{f}¹R_{f}²)_{b}-CF₂CF₂-O-CF₂-R_{F}]_{n"}-F;
(II) HOOC-R_{F}-[-CF₂-O-CF₂CF₂-(CR_{f}¹R_{f}²)ₐ-O-R_{f}-O-(CR_{f}¹R_{f}²)_{b}-CF₂CF₂-O-CF₂-R_{F}]_{n"}-COOH;
(III) HOOC-R_{F}-[-CF₂-O-CF₂CF₂-(CR_{f}¹R_{f}²)ₐ-O-R_{f}-O-(CR_{f}¹R_{f}²)_{b}-CF₂CF₂-O-CF₂-R_{F}]_{n"}-F;
wherein, in each of formula (I), (II) and (III):
R_{F} is a bond or a C₁-C₁₈ perfluorocarbon group, preferably comprising one or more than one ethereal oxygen;
R_{f} is a C₁-C₁₈ perfluorocarbon group, preferably comprising one or more than one ethereal oxygen;
each or R_{f}¹ and R_{f}², equal to or different from each other, is F or a C₁-C₆ perfluorocarbon group;
a and b being independently zero or 1, preferably being equal to each other,
and being collectively zero or 1;
n" is such that the number average molecular weight of compounds (I) is between 8 000 and 50 000 g/mol, as determined by GPC analysis;
**characterized in that** said mixture comprises at least 75.00 wt.%, preferably from 75.00 to 99.99 wt.%, more preferably from 80.00 to 99.99 wt.% and even more preferably from 90.00 to 99.99 wt.% of polymer of formula (I).

5. Mixture (M) according to Claim 4, wherein in any of polymers of formulae (I), (II) and (III), n" is such that the number averaged molecular weight of polymer (I) is between 10 000 and 30 000, preferably between 12 000 and 20 000 g/mol, as determined by GPC analysis.

6. Mixture (M) according to Claims 4 or 5, said mixture (M) comprising at most 25.00 wt.%, preferably at most 20.00 wt.% and more preferably at most 10.00 wt.% of compounds of formula (II) and (III) based on the total weight of mixture (M).

7. Mixture (M) according to any one of Claims 4 to 6, said mixture (M) comprising from 0.001 wt.%, more preferably from 0.005 wt.% and even more preferably 0.01 wt.% of compounds of formula (II) and (III) based on the total weight of mixture (M).

8. Mixture (M) according to any one of Claims 4 to 7, said mixture (M) comprising compounds complying with formula (IV) : 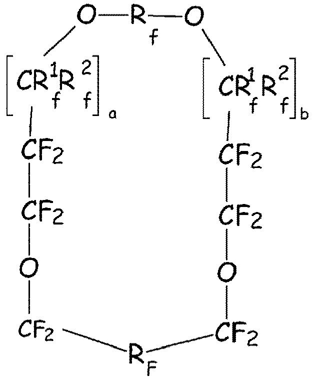 wherein
R_{F}, R_{f}, R_{f}¹, R_{f}², a and b have the meaning defined above; and n" is such that the number averaged molecular weight of compounds of formula (IV) is from 300 to 50 000, preferably of 400 to 40 000, more preferably of 500 to 25 000, as determined by GPC.

9. Mixture (M) according to Claim 8, wherein said compounds complying with formula (IV) are in an amount below 0.01 wt. % based on the total weight of said mixture (M).

10. A composition [composition (CL)] comprising polymer (P) as defined in any one of Claims 1 to 3 and/or mixture (M) as defined in any one of Claims 4 to 9, in admixture with at least one lubricant different from polymer (P) and/or at least one additive.

11. Composition (CL) according to Claim 10, wherein said at least one lubricant different from polymer (P) is selected in the group comprising partially fluorinated, fully fluorinated and hydrogenated base oils.

12. Composition (CL) according to Claim 10, wherein said at least one additive is selected from thickening agents, antirust agents, antioxidants, thermal stabilizers, pour-point depressants, antiwear agents, including those for high pressures, dispersants, tracers, dyestuffs, talc and inorganic fillers.

13. A method for lubricating at least one surface of at least one article, said method comprising contacting at least one of said polymer (P) as defined in any one of Claims 1 to 3, said mixture (M) as defined in any one of Claims 4 to 9, or said composition (CL) as defined in any one of Claims 10 and 11, with said at least one surface.

14. The method according to Claim 13, wherein said at least one article comprises at least one metal surface.

15. The method according to Claims 13 or 14, wherein said article is selected in the group comprising pumps, preferably pumps for use in oil and gas applications, and rotary transfer machines.
